(19) Europäisches Patentamt
European Patent Office
Office européen des brevets

(11) Publication number : **0 565 387 A1**

(12) **EUROPEAN PATENT APPLICATION**

(21) Application number : **93302857.3**

(51) Int. Cl.$^5$ : **C08L 101/02**

(22) Date of filing : **13.04.93**

(30) Priority : **10.04.92 JP 90582/92**
**14.07.92 JP 186535/92**

(43) Date of publication of application :
**13.10.93 Bulletin 93/41**

(84) Designated Contracting States :
**BE DE FR GB IT**

(71) Applicant : **DAI-ICHI KOGYO SEIYAKU CO., LTD.**
**55 Nishishichijo Higashikubo-cho**
**Shimogyo-ku Kyoto 600 (JP)**

(72) Inventor : **Kitazawa, Naoki**
**508-2 Ohhara Ueno-cho**
**Sakyo-ku, Kyoto 601-12 (JP)**

Inventor : **Kikuta, Manabu**
**16-19 Koaza Hatta, Ohaza Kusauchi, Tanabe-cho**
**Tsuzuki-gun, Kyoto 610-03 (JP)**
Inventor : **Hotta, Hiroshi**
**12-120 Ohharano Nishisakaidani-cho 4-chome**
**Nishikyo-ku, Kyoto 615 (JP)**
Inventor : **Nakayama, Yutaka**
**21 Hazama-cho**
**Kamigamo, Kita-ku, Kyoto 603 (JP)**
Inventor : **Sumi, Hideyuki**
**7-12 Yamasaka 3-chome**
**Higashisumiyoshi-ku, Osaka 546 (JP)**

(74) Representative : **Rackham, Anthony Charles**
**Lloyd Wise, Tregear & Co. Norman House**
**105-109 Strand**
**London WC2R 0AE (GB)**

(54) **Copolymers and thermoplastic resin compositions.**

(57) Thermoplastic resin compositions are disclosed. This conpositions have the following component A-1 or A-2, component B and component C :
(A-1) ; a polymer component having a functional group which can react with amino group, or (A-2) ; a composition of the component (A-1) and a resin which belongs to the component B but differs from the resin used in the following component B, (B) a thermoplastic resin component which virtually does not react with amino group under the moulding conditions, and (C) a graft copolymer obtained from graft reaction of a thermoplastic polymer with a compound (I), or a copolymer which has the repeating unit (II) and the repeating unit of an ethylenic unsaturated monomer (where $R^1$-$R^4$ indicate hydrogen atom, alkyl group, etc.).

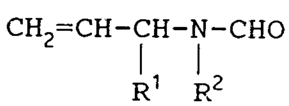

(I)

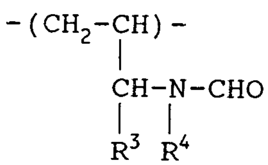

(II)

EP 0 565 387 A1

The present invention relates to new thermoplastic resin compositions which can be used in the forms of mouldings sheets and films produced by injection moulding and extrusion moulding. The present invention also relates to copolymers which are added, as compatibilizing agent, to thermoplastic resin compositions.

Engineering plastics such as polyamide, polyacetal, polyphenylene ether, polybutylene terephthalate, polycarbonate and polyphenylene sulfide generally have excellent mechanical properties such as impact resistance and thermal properties such as heat resistance. Nevertheless they have problems of inferior processing property and higher production cost. Moreover, some desired properties other than mechanical and thermal ones, for instance, chemical resistance or low water absorption, may not be provided with one kind of the above-mentioned engineering plastics.

On the other hand, polyolefinic resins being typified by polypropylene, polystyrene resins being typified by polystyrene, and ABS resin are inferior to the engineering plastics in physical properties such as impact resistance and heat resistance, although they are excellent in processing property and production cost. Polystyrene resins and ABS resins are amorphous resins and are inferior in solvent resistance.

Hence many efforts have been made to blend or alloy two engineering plastics having different properties, to blend or alloy an engineering plastic and a polyolefinic resin, and to blend or alloy a polyolefine resin and a polystyrene resin, so as to complement with each other in their weak points and to produce resin compositions having new functional properties.

Simple blending, however, of two engineering plastics, of an engineering plastic and a polyolefinic resin, or of an engineering plastic and a polystyrene resin does not work well, and the resulting resin compositions have a lower impact resistance. When such resin compositions are moulded, the mouldings have problems of inferior appearance and interlaminer cleavage.

It is well known that such resin compositions can be improved in impact resistance to some extent by adding an elastomer component. The addition, however, poses a problem of reduced rigidity of the resulting resins. The problems of interlaminer cleavage and defective appearance when such resins are moulded have not been solved essentially.

To solve such problems, attempts have been made to improve the compatibility of resins to be blended by using a compatibilizing agent.

For example, as for polyamide, a graft polymer which is generated by the reaction between polyamide and maleic anhydride modified polyolefine in the extruder is used as a compatibility agent (Kobunshi-Kagaku, Vol. 29, p. 259 (1972)). Moreover, a compatibilizing agent is known, which is produced by mixing and reacting this system with a multifunctional compound that can react with carboxyl group, carboxylic anhydride group, amino group, etc. to cause partial bridging (Provisional Patent Publication No. SHO-64-31864). With the use of this compatibilizing agent, resin compositions can be improved further in heat resistance and impact resistance.

To blend polypropylene with an engineering plastic such as polyamide, polyester, aromatic polyether, polyacetal, polycarbonate or ABS resin, it has been proposed to improve the compatibility of the resins by using a compatibilizing agent which is prepared by reacting unsaturated acid or anhydride modified polyolefine with low molecular weight diol, diamine, or a low molecular weight compound having hydroxyl group and amino group, or if necessary, said compatibilizing agent with an addition of thermoplastic urethane (Provisional Patent Publication No. HEI-2- 36248).

The use of the above-mentioned known compatibility agents, however, has not sufficiently solved the problem of compatibility of resins, and the resulting resin compositions have insufficient impact resistance. When such resin compositions are moulded, they have problems of defective appearance and/or interlaminer cleavage. Moreover, depending on the kind of compatibility agent to be used, a new problem was experienced; the resin composition itself was colored by the high temperature during moulding.

The present invention was made in view of the above-mentioned problems of the prior art. The present invention is intended to provide thermoplastic resin compositions which have excellent impact resistance and heat resistance and, when moulded, present good appearance without any interlaminer cleavage. Another object of the present invention is to provide new copolymers which are added, as compatibilizing agent, to said resin compositions.

The present inventors found that when a graft copolymer or copolymer having formamide group is used as a compatibility agent, a thermoplastic resin composition which meets the above-mentioned objectives is produced. This finding resulted in the completion of the present invention.

The thermoplastic resin compositions of the present invention are thermoplastic resin compositions characterized in that they contain the following component A, component B and component C:

(A) a polymer component having a functional group which can react with amino group;

(B) a thermoplastic resin component which virtually does not react with amino group under the moulding conditions; and

(C) a graft copolymer or copolymer having formamide group.

Furthermore, the thermoplastic resin compositions of the present invention are thermoplastic resin compositions characterized in that they contain the following component A, component B and component C:

(A) a composition comprising a polymer component having a functional group which can react with amino group and a thermoplastic resin which virtually does not react with amino group under moulding conditions and differs from the resin used in the following component B;

(B) a thermoplastic resin component which virtually does not react with amino group under the moulding conditions; and

(C) a graft copolymer or copolymer having formamide group.

The component A of the thermoplastic resin compositions according to the present invention may be roughly divided, as mentioned above, into two types;

Component (A-1) and Component (A-2). These Components are as follows:

(A-1) a polymer component having a functional group which can react with amino group; and

(A-2) a composition comprising a polymer component having a functional group which can react with amino group and a thermoplastic resin which virtually does not react with amino group under moulding conditions and differs from the resin used in the component B;

The polymer components having a functional group that can react with amino group to be used in said Component (A-1) and Component (A-2) may be divided into the following two types; Component (A-a) and Component (A-b):

(A-a): Polymer component having one or more resins selected from a group of polyester resin, polycarbonate resin and polyamide resin;

(A-b): Polymer component having one or more kinds of polymers having, in the molecule, a functional group selected from a group of succinic anhydride group, carboxyl group, epoxy group, ester group, amide group, cyclic iminoether group, cyclic iminoamino group, halogen group, imido group and isocyanate group.

As for the component B of the thermoplastic resin compositions according to the present invention, a thermoplastic resin component which virtually does not react with amino group under the moulding conditions is used as mentioned above. Specific examples include polyolefinic resin, polystyrene resin, ABS resin and polyether resin.

As for the component C of the thermoplastic resin compositions according to the present invention, a polymer having formamide group is used as mentioned above; said polymers are of two types, graft type and copolymer type.

The graft type polymers are those obtained by graft reaction of thermoplastic polymer with formamide compound expressed by the following formula I.

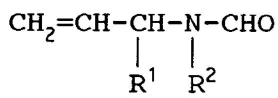

(I)

(Where $R^1$ and $R^2$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

The copolymer type polymers are copolymers having, in the molecule, the formamide repeating unit (II) expressed by the following formula and a repeating unit of ethylene unsaturated monomer.

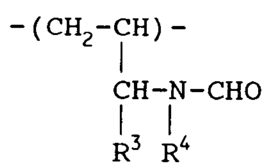

(II)

(Where $R^3$ and $R^4$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

In the following, the respective components of the thermoplastic resin compositions according to the present invention will be described in more detail.

## Component A

As described above, the component A of the thermoplastic resin compositions according to the present invention may be roughly divided into the following two types; Component (A-1) and Component (A-2):

(A-1): Polymer component having a functional group which can react with amino group;

(A-2): A composition comprising a polymer component having a functional group which can react with amino group and a thermoplastic resin which virtually does not react with amino group under moulding conditions and differs from the resin used in the component B.

The polymer components having a functional group that can react with amino group to be used in said Component (A-1) and Component (A-2) may be divided into the two types; Component (A-a) and Component (A-b):

Component (A-a) is a polymer component having a bond group, in the main chain, that can react with amino group (main chain reaction type). Such bond groups include those of ester bond, carbonic ester bond, amide bond, urethane bond and imide bond. Specific examples of Component (A-a) include polyester resin, polycarbonate resin and polyamide resin. One or more kinds of such resins are used as Component (A-a).

When explained in more detail, polyester resin of Component (A-a) is not limited to any one kind; various kinds of polyester resin may be used. Both aliphatic and aromatic polyester resins may be used. When physical properties are considered, the latter aromatic polyester resins are preferable. The molecular weight may be selected according to the intended application, etc. The intrinsic viscosity is normally from 0.2 to 2.0 dL/g, and preferably from 0.5 to 1.2 dL/g. The polyester resins may have carboxyl acid terminal or alcoholic hydroxyl group terminal, and the ratio is not particularly limited but 9/1 to 1/9 is preferable.

Such polyester resins may be produced by a variety of known methods, and many kinds can be used. Specific examples of polyester resin of Component (A-a) include polyethylene terephthalate (PET), polybutylene terephthalate (PBT), polycyclohexadimethyl terephthalate (PCT) and polycondensed polymer of bisphenol A and phthalic acid.

The polycarbonate resin of Component (A-a) may be both aliphatic and aromatic polycarbonates. Examples of such polycarbonates include polymers and copolymers comprising bisphenols such as 2,2- bis(4-oxyphenyl)alkane, bis(4-oxyphenyl)ether, and bis(4- oxyphenyl)sulfone, sulfide and sulfoxide.

The polyamide resin of Component (A-a) is not limited to any specific kind. Various kinds of polyamide resin may be used. Both aliphatic and aromatic polyamide resins may be used. The molecular weight is not particularly limited. When the processing property and other physical properties of resulting mouldings are considered, the number average molecular weight is from 4,000 to 50,000, and preferably from 5,000 to 30,000.

Such polyamide resins may be produced by a variety of known methods. For instance, they may be produced by ring opening (co)polymerization or (co)polycondensation of lactams with three or more rings, polymerizable omega-amino acid and dibasic acid and diamine.

The polyamide resin of Component (A-a) may be of many kinds. Specific examples include aliphatic polyamides such as nylon 6, nylon 6,6, nylon 6,10, nylon 11, nylon 12, nylon 6,12 and nylon 4,6, aliphatic copolymer polyamides such as nylon 6/6, nylon 6/6,10, and nylon 6/6,12, and aromatic polyamides such as polyhexamethylenediamine terephthalamide, polyhexamethylenediamine isophthalamide, and polyamides having xylene group. Moreover, polyesteramide and polyesteretheramide may be used. Of these, preferable ones are nylon 6 and nylon 6,6.

The other Component (A-b), being a polymer component having a functional group that can react with amino acid, is a polymer component having a functional group, on the side chain or molecule end of the polymer, that can react with amino acid (side chain or terminal reaction type). Examples of such functional groups include succinic anhydride group, carboxyl group, epoxy group, ester group, amide group, cyclic iminoether group, cyclic iminoamino group, halogen group, imido group and isocyanate group. Of these groups, the most important and preferable functional groups are succinic anhydride group, carboxyl group, epoxy group and cyclic iminoether group. Component (A-b) may contain one kind or two or more kinds of polymers having the above-mentioned functional groups.

When explained in more detail, a polymer having succinic anhydride group in the side chain, as Component (A-b), may be obtained by copolymerizing maleic anhydride or itaconic anhydride with ethylene unsaturated monomer, or by making graft copolymerization of polymer such as polyolefine with maleic anhydride or with itaconic anhydride in the presence of a radical polymerization initiator. Specific examples include styrene-maleic anhydride copolymer, isobutylene-maleic anhydride copolymer, and ethylene-maleic anhydride copolymer. Furthermore, specific examples include some polymers graft-reacted with maleic anhydride; such polymers include polyethylene, polypropylene, SEBS (hydrogenated styrene-butadiene-styrene block copolymer), ethylene-propylene rubber, EPDM (ethylene-propylene-diene copolymer), styrene-isoprene copolymer, and polyphenylene ether.

A polymer having carboxyl group in the side chain, as Component (A-b), may be obtained by copolymerizing ethylenic unsaturated-bond-containing carboxylic acid such as acrylic acid and methacrylic acid with ethylenic unsaturated monomer, or by making graft copolymerization of polymer such as polyolefine with ethylenic unsaturated-bond-containing carboxylic acid. Specific examples include styrene-acrylic acid copolymer, ethylene-methacrylic acid copolymer, and ethylene-maleic anhydride-acrylic acid copolymer. Furthermore, specific examples include some polymers graft-reacted with acrylic acid or with methacrylic acid; such polymers include polystyrene, polypropylene, SEBS (hydrogenated styrene-butadiene-styrene block copolymer), and ethylene-propylene rubber.

A polymer having epoxy group in the side chain, as Component (A-b), may be, for example, a copolymer of glycidyl acrylate or glycidyl methacrylate with ethylenic unsaturated monomer. Typical examples include ethylene-glycidyl methacrylate copolymer, propylene-glycidyl methacrylate copolymer, and styrene-grycidyl methacrylate copolymer.

A polymer having ester group in the side chain, as Component (A-b), may be, for example, a copolymer of ester-group-containing ethylene unsaturated monomer, such as acrylic acid alkyl ester, methacrylic acid alkyl ester, and alkylvinyl ester, with another ethylene unsaturated monomer. Specific examples include ethylene-acrylic acid ester copolymer, ethylene-methacrylic acid ester copolymer, and ethylene-vinyl acetate copolymer.

A polymer having amide group in the side chain, as Component (A-b), may be a copolymer of acrylamide, methacrylamide, N- methylacrylamide, N-methylmethacrylamide, N,N-dimethylacrylamide, or N,N-dimethylmethacrylamide with another ethylene unsaturated monomer.

A polymer having cyclic iminoether group in the side chain, as Component (A-b), may be a copolymer of 2-vinyloxazoline or 2-vinyloxazine with another ethylene unsaturated monomer. A typical example is styrene-2-vinyloxazoline copolymer.

A polymer having cyclic iminoamino group in the side chain, as Component (A-b), may be a copolymer of 2-vinylimidazorine with another ethylenic unsaturated monomer.

Specific examples of a polymer having halogen group in the side chain, as Component (A-b), include polyvinyl chloride, chlorinated polyolefine, chloroethylvinyl ether copolymer, and chloromethylated polystyrene.

Specific examples of a polymer having imido group in the side chain, as Component (A-b), include copolymers of N-phenylmaleimide or N-alkylmaleimide with another ethylenic unsaturated monomer.

A polymer having carboxyl group at a terminal of molecule, as Component (A-b), may be, for example, a polymer including carboxyl group on one side of the terminals obtained by radical polymerization using such a radical polymerization initiator having carboxyl group, and, if necessary, with a chain transfer agent having carboxyl group.

Specific examples include terminal carboxypolystyrene, terminal carboxypolyisoprene, terminal carboxypolyacrylic acid ester, and terminal carboxy-polymethacryl acid ester. Furthermore, examples of a polymer having carboxyl group at a terminal of molecule include terminal carboxypolyester and terminal carboxypolyamide which are obtained from polycondensation in the presence of excessive dicarbonic acid.

A polymer having epoxy group or ester group at a terminal of molecule, as Component (A-b), may be, for example, polystyrene with terminal ester group or terminal epoxy group, which is obtained by estrification of the above-mentioned terminal carboxypolystyrene by means of lower alcohol or glycidol.

Component (A-2), which is used as the component A of the thermoplastic resin compositions according to the present invention, is a composition, as mentioned before, comprising a polymer component having a functional group that can react with amino group (A-a) or (A-b) and a thermoplastic resin that virtually does not react with amino acid under the moulding conditions.

The above-mentioned thermoplastic resin, which virtually does not react with amino acid under the moulding conditions, belongs to a category of thermoplastic resins of the component B as will be explained in detail later, but is different from the resin used as the component B of the thermoplastic resin composition having this Component (A-2). It is desirable that the above-mentioned thermoplastic resin has a good compatibility or affinity with Component (A-a) or (A-b).

The blending ratio of the above-mentioned thermoplastic resin which virtually does not react with amino group under the moulding conditions to Component (A-a) or (A-b) in Component (A-2) is from 99 parts/1 part to 50 parts/50 parts, and preferably from 97 parts/3 parts to 60 parts/40 parts.

When the above-mentioned blending ratio is greater than 99/1, the compatibility of the resulting thermoplastic resin composition will not be sufficient. When the above-mentioned blending ratio is smaller than 50/50, the resulting thermoplastic resin composition will have economic disadvantage. Moreover, its mechanical properties may be inferior.

## Component B

As mentioned before, the component B of the thermoplastic resin compositions according to the present invention is a thermoplastic resin component which virtually does not react with amino group under the moulding conditions. Specific examples of such thermoplastic resin component include polyolefinic resin, polystyrene resin, ABS resin and polyether resin, and one or more kinds of such resins are used as the component B.

When explained in more detail, the polyolefinic resins of the component B include polyolefines and their olygomers, polyolefinic elastomers, polyolefine thermoplastic elastomers, ethylene-vinylester copolymer, and ethyleneacrylester copolymer, and include blends of such polyolefines and copolymers.

Specific examples of polyolefinic resin of the component B include homopolymers such as polyethylene [linear low density polyethylene (LLDPE), low density polyethylene (LDPE), very low density polyethylene (VLDPE), medium density polyethylene, high density polyethylene (HDPE), etc.], polypropylene, polybutene and polyisobutene; ethylene-alpha-olefine copolymers such as ethylene-propylene copolymer, ethylene-propylene copolymer of low crystallinity, ethylene-propylene copolymer rubber (EPR), ethylene-butene copolymer (EBM), ethylene-propylene-diene copolymer (EPDM), ethylene-propylene-butene copolymer and ethylene-butylene copolymer; copolymers of propylene and other alpha-olefines such as propylene-butene copolymer; and polyolefine thermoplastic elastomers mainly comprising blends of various ethylene copolymers [ethylene-vinyl acetate copolymer (EVA), ethylene-vinyl alcohol copolymer (EVOH), ehtylene-alkylacrylate copolymer, ethylene-alkylmethacrylate copolymer, etc.], poly(4-methyl-1-pentene), butyl rubber, butadiene rubber, polypropylene and ethylene-propylene rubber, and their mixtures. Copolymers in this context include randam copolymers, block copolymers, randam block copolymers and graft copolymers.

Of such polyolefine resins, it is desirable to use polypropylene, polyethylene, ethylene-propylene rubber and EPDM. Their average molecular weights are from 5,000 to 300,000, and preferably from 10,000 to 200,000.

Polystyrene resins of the component B include homopolymers or copolymers of styrene, alpha-methylstyrene and p-methylstyrene. Specific examples include general purpose polystyrene (GPPS), high impact polystyrene (HIPS), and so-called styrene thermoplastic elastomers such as SEBS resin (hydrogenated styrene-butadiene-styrene block copolymer), SEPS resin (hydrogenated styrene-isoprene-styrene block copolymer) and SEP resin (hydrogenated styrene-isoprene block copolymer).

Of such polystyrene resins, it is desirable to use general purpose polystyrene (GPPS) and high impact polystyrene (HIPS). Their average molecular weights are from 20,000 to 300,000, and preferably from 30,000 to 200,000.

The types of ABS resins of the component B are not particularly limited, and those produced by the graft method and the polymer blend method may be used. Furthermore, AS resin (acrylonitrile-styrene resin) and AES resin (acrylonitrile-EPDM-styrene resin) may be used. ABS resin, however, is preferable.

Polyether resins of the component B include many kinds. For instance, they may be roughly divided into polyacetal homopolymers such as polyoxymethylene (POM), polyacetal copolymers with mixture of polyether structure such as trioxane-ethylene oxide copolymer, polyphenylene ether (PPE), polyether sulfone (PES) mixing ether group and sulfone group, polyether ketone (PEK) mixing ether group and carbonyl group, polyphenylene sulfide (PPS) having thioether group, and polysulfone (PSO). Of these, it is desirable to use polyacetal [polyoxymethylene (POM)] and polyphenylene ether (PPE).

The above-mentioned polyphenylene ether includes compositions into which polystyrene is blended for better mouldability.

## Component C

As mentioned above, polymers having formamide group are used as the component C (compatibilizing agent) of the thermoplastic resin compositions according to the present invention. Said polymers are of two types; graft type and copolymer type. In the following, the respective types of polymers will be explained in more detail.

### Graft Type

The graft copolymers having formamide group used as the component C of the thermoplastic resin compositions according to the present invention are graft copolymers which are obtained from graft polymerization, by a known method, of a thermoplastic polymer with a formamide compound (I).

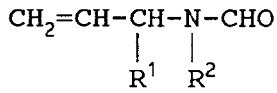

(I)

(In chemical formula (I), $R^1$ and $R^2$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

The graft copolymers are produced by reacting a thermoplastic polymer having average molecular weight of 5,000 to 500,000 with a formamide compound (I) (allylformamide derivative) in the presence of a catalyst for free radical generation at a temperature sufficient to generate free radical up to 250 C (Celsius degree).

The above-mentioned thermoplastic polymer which is subjected to graft reaction with the formamide compound (I) is compatible to or has affinity for the thermoplastic resin component of the component B and for the thermoplastic resin in Component (A-2) which virtually does not react with amino group under the moulding conditions.

With regard to such thermoplastic polymers, thermoplastic polymers having affinity for polyolefine resins include polyolefines and their olygomers, polyolefine elastomers and their olygomers, ethylene-vinylether copolymer and its olygomers, ethylene-acrylether copolymer and its olygomers, as well as the blends of such polyolefines and olygomers.

When explained in more detail, the above-mentioned polyolefines include high density polyethylene, medium density polyethylene, low density polyethylene, polypropylene, polybutene, poly-4-methylpentene-1, and copolymers of ethylene and alpha-olefines. The above-mentioned polyolefine elastomers include ethylene-propylene rubber, ethylene-propylene-diene copolymer (EPDM), ethylene-vinyl acetate copolymer (EVA), butyl rubber, butadiene rubber, amorphous ethylene-propylene copolymer, propylene-butene copolymer and their olygomers. Moreover, they include polyolefine thermoplastic elastomers mainly comprising blends of polypropylene and ethylene-propylen rubber. Of the olefine polymers and olefine copolymers mentioned above, it is desirable to use polypropylene, ethylene-propylene rubber, EPDM and their olygomers.

The thermoplastic polymers having affinity for polystyrene resin, ABS resin and polyether resin are suitably provided by thermoplastic polymers having aromatic group in the molecule, such as polystyrene, styrene-alphamethylstyrene copolymer, styrene-p-methylstyrene copolymer, styrene-butadiene copolymer and its hydride, SEBS, styreneisoprene copolymer and its hydride, SEPS, polyphenylene ether and polyphenylene sulfide. Of these polymers, it is desirable to use SEBS, SEPS and polyphenylene ether.

On the other hand, the above-mentioned formamide compound (I), which is used as the graft monomer in the production of the graft copolymer of the component C may be provided by N-alkenylformamide compounds and N-alkyl-N-alkenylformamide compounds.

When explained in more detail, the above-mentioned N-alkenylformamide compounds include N-allylformamide, N-(1-methyl-2-propenyl)formamide, N-(1-ethyl-2-propenyl)formamide, N-(1-n-propyl-2-propenyl)formamide, N-(1-n-2-butyl-2-propenyl)formamide, N-(1-n-hexyl-2-propenyl)formamide, N-(1-cyclohexyl-2-propenyl)formamide, and N-(1-benzyl-2-propenyl)formamide. The above-mentioned N-alkyl-N-alkenylformamide compounds include N-methyl-N-allylformamide, N-methyl-N-(1-methyl-2-propenyl)formamide, N-ethyl-N-allylformamide, N-ethyl-N-(1-methyl-2-propenyl)formamide, N-propyl-N-(1-benzyl-2-propenyl)formamide, N-butyl-N-(1-cyclohexyl-2-propenyl)formamide, N-hexyl-N-(1-n-hexyl-2-propenyl)formamide, N-octyl-N-(1-n-butyl-2-propenyl)formamide, N-benzyl-N-allylformamide, and N-cyclohexyl-N-allylformamide.

Of these, it is preferable to use N-allylformamide, N-(1-methyl-2-propenyl)formamide, N-methyl-N-allylformamide, N-methyl-N-(1-methyl-2-propenyl)formamide, N-ethyl-N-allylformamide, and N-ethyl-N-(1-methyl-2-propenyl)formamide.

The above-mentioned formamide compounds (I) are used in the form of a mixture with a small quantity of a catalyst for free radical generation, and are grafted to the thermoplastic polymer by heating the reaction mixture to a temperature which is sufficient to promote the graft reaction at an appropriate speed yet not so high to cause destructive decomposition of the reacting species or reaction products.

The graft reaction is catalyzed by using a catalyst for free radical generation such as peroxides, dialkyl-, diacyl, alkyl-acyl peroxides or azo compounds at an appropriate range of temperature, and the graft reaction is externally initiated by cocatalysts such as metal salt or complex or by irradiation of light.

Typical examples of the above-mentioned catalysts for free radical generation include di-t-butyl peroxide, dicumyl peroxide, t-butyl perbenzoate, benzoyl peroxide, cyclohexanone peroxide, docecyl peroxide, azobisisobutyronitrile and the like, and their mixtures. Of these catalytic, it is desirable to use di-t-butyl peroxide, dicumyl peroxide and their mixtures.

As for the quantity of the above-mentioned catalysts for free radical generation, it is sufficient to provide

a quantity which is adequate as catalyst, and the effective range is from 1 to 200 g per 1 kg of thermoplastic polymer, and the preferable range is from 1 to 100 g per 1 kg of thermoplastic polymer. The catalyst may be entirely added at the beginning of the graft reaction, or it may be added little by little as the reaction proceeds.

The above-mentioned thermoplastic copolymer is stirred in the mixture containing the formamide compound (I) and the catalyst for free radical generation at an appropriate reaction temperature. The useful reaction temperature depends on the kind of the catalyst used, but is in the range from the room temperature to 250C. When di-t-butyl peroxide or dicumyl peroxide is used as the catalyst, the preferable reaction temperature range is from 100 to 200C.

When the molecular weight exceeds 2,000, the above-mentioned thermoplastic polymers generally become very viscous. Then it may be hard to stir or may look like rubber. In such a case, it is preferable to carry out the reaction in an inert solvent. Useful solvents include nonane, decane and similar aliphatic hydrocarbons, and chlorobenzene, dichlorobenzene, dichlorotoluene and similar chlorinated hydrocarbons.

Of the formamide compound graft copolymers thus obtained, those suitably used according to the present invention are graft copolymers which are obtained from graft reaction between a thermoplastic polymer, which is selected from polyolefines or olefinic copolymers such as polypropylene, polyethylene, ethylene-propylene copolymer and ethylene-propylene rubber, SEBS, SEPS and polyphenylene ether, and N-allylformamide, N-(1-methyl-2-propenyl)formamide, N-methyl-N-allylformamide or N-methyl-N-(1-methyl-2-propenyl)formamide.

The quantity of the formamide compound (I) to be grafted in the graft copolymer of the component C can not be determined unconditionally since it depends on the desired physical properties and appearance of the thermoplastic resin composition to be produced. It, however, is normally sufficient to grafting with 0.05 to 20 parts by weight of the formamide compound (I) to 100 parts by weight of the thermoplastic polymer being the raw material of the component C, and preferably with 0.2 to 10 parts by weight of the formamide component (I). When the quantity to be grafted is less than 0.05 part by weight, the resins in the final thermoplastic resin compositions will have insufficient compatibility to each other. When the quantity to be grafted exceeds 20 parts by weight, it may be uneconomical to produce the thermoplastic resin compositions or the physical properties of the resulting resin compositions may be inferior.

## Copolymerization Type

The copolymers having formamide group used as the component C of the thermoplastic resin compositions according to the present invention are copolymers which have the formamide repeating unit (II) expressed by the following formula and the repeating unit of ethylene unsaturated monomer in the molecule.

$$\begin{array}{l} -(CH_2-CH)- \\ \qquad\quad | \\ \qquad\quad CH-N-CHO \qquad\qquad (II) \\ \qquad\quad |\quad\;\; | \\ \qquad\quad R^3\;\; R^4 \end{array}$$

(Where $R^3$ and $R^4$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

The copolymers having the formamide group are produced by radical polymerization, ionic polymerization or coordination polymerization of the ethylene unsaturated monomer and the formamide compound (monomer) with a known method.

The above-mentioned ethylenic unsaturated monomers, which are used as the raw materials of the copolymer of the component C, are monomers which can be copolymerized with the above-mentioned formamide compounds, and their specific examples include aromatic unsaturated monomers such as styrene, alpha-methylstyrene and p-methylstyrene, alpha-olefines such as ethylene, propylene, 1-butane, 1-hexene, 1-octane and 1-dodecene, vinyl esters such as vinyl acetate and vinyl propionate, and acrylic acid esters or methacrylic acid esters such as ethylacrylate, propylacrylate and methylmethacrylate.

Of these, the preferable ones are styrene and alpha-olefines. On the other hand, the above-mentioned formamide compound, which is copolymerized with ethylene unsaturated monomer in the production of the copolymer of the component C, may be provided by N-alkenylformamide compounds and N-alkyl-N-alkenylformamide compounds.

When explained in more detail, the above mentioned alkenylformamide compounds include N-allylformamide, N-(1-methyl-2-propenyl)formamide, N-(1-ethyl-2-propenyl)formamide, N-(1-n-propyl-2-propenyl)formamide, N-(1-n-butyl-2-propenyl)formamide, N-(1-n-hexyl-2-propenyl)formamide, N-(1-cyclohexyl-2-propenyl)formamide, and N-(1-benzyl-2-propenyl)formamide. The above-mentioned N-alkyl-N-alkenylformamide compounds include N-methyl-N-allylformamide, N-methyl-N-(1-methyl-2-propenyl)formamide, N-ethyl-N-allylformamide, N-ethyl-N-(1-methyl-2-propenyl)formamide, N-propyl-N-(1-benzyl-2-propenyl)formamide, N-butyl-N-(1-cyclohexyl-2-propenyl)formamide, N-hexyl-N-(1-n-hexyl-2-propenyl)formamide, N-octyl-N-(1-n-butyl-2-propenyl)formamide, N-benzyl-N-allylformamide, and N-cyclohexyl-N-allylformamide.

Of these, it is preferable to use N-allylformamide, N-(1-methyl-2-propenyl)formamide, N-methyl-N-allylformamide, N-methyl-N-(1-methyl-2-propenyl)formamide, N-ethyl-N-allylformamide, and N-ethyl-N-(1-methyl-2-propenyl)formamide.

When the above-mentioned formamide compounds and ethylenic unsaturated monomers are copolymerized, copolymers having formamide group of the component C will be obtained. Such copolymers are addition polymers which are produced by solution polymerization, emulsion polymerization, precipitation polymerization, suspension polymerization or bulk polymerization.

The methods of the copolymerization reactions are not particularly specified. It, however, will be convenient to use the radical copolymerization method which utilize free radical generating catalysts such as peroxides and azo compounds in an adequate temperature range or Ziegler-Natta method which utilizes ionic polymerization catalysts of titanium-trichloride-triethylaluminium.

The free radical generating catalysts to be used in the radical copolymerization method include benzoyl peroxide, t-butylbenzoate, cyclohexane peroxide, azobisisobutyronitrile and the like, and their mixtures. Regarding the quantity of the free radical generation catalysts, it is sufficient to provide a quantity which is adequate as catalyst, and the effective range is from 0.1 to 5.0 % by weight relative to the monomer. The reaction temperature must be high enough to allow the catalyst to generate the free radical. The useful temperature range depends on the kind of the catalyst to be used, and is from the room temperature to 150C.

The ionic polymerization catalysts to be used in Ziegler-Natta method include titanium tetrachloride-triethylaluminium , titanium trichloride-triethylaluminium, and combinations of alkylates of various metals of Groups 1, 2 and 3 and transition metal compounds of Groups 4-7.

The reaction solvents to be used in such copolymerization reactions are preferably inert ones, and specific examples include heptane, octane, benzene, toluene, xylene and chlorobenzene.

The composing ratio of the respective constitutional repeating units of the copolymers having formamide group of the component C can be determined by measuring their infrared absorption spectrum. The composing ratio of the respective repeating units can be determined by comparing the ratio of the absorbance of the absorptions at 1450-1500 $cm^{-1}$ or 710-730 $cm^{-1}$ that are unique to the repeating unit of ethylene unsaturated monomer and the absorbance of the absorption at 1650-1700 $cm^{-1}$ that is unique to the formamide repeating unit (II).

The copolymers having formamide group of the component C contain the repeating units of the ethylene unsaturated monomer by 80-99.5 % in the molecule, and preferably by 90-99.8 %. The formamide repeating units (II) are contained by 0.05-20 % in the molecule, and preferably by 0.2-10 %.

When the content of the formamide repeating unit (II) in the above-mentioned copolymers is less than 0.05 %, the compatibility of the resins in the final thermoplastic resin compositions is inferior. When the content exceeds 20 %, the copolymerizability of the formamide compounds is not so high, and it is not economical to produce the copolymers. Hence the production of the thermoplastic resin composition is not economical, and the physical properties of the resin compositions may be deteriorated.

## Ratio of Components of Thermoplastic Resin Compositions

The thermoplastic resin compositions according to the present invention have essential components; the component A, the component B and the component C described in [1] through [3] above. When necessary, may be added other additives (reinforcements such as glass fiber and carbon fiber, inorganic filler, thermal stabilizer, antistatic agent, antioxidant, light stabilizer, fire retarding agent, and weather resistance agent).

Regarding the mixing ratios of the above-mentioned components A, B and C of the thermoplastic resin compositions according to the present invention, when the total of the components A and B is 100 parts by weight, the component A is from 5 to 95 parts by weight, and preferably from 20 to 95 parts by weight, and the component B is from 95 to 5 parts by weight, and preferably from 80 to 5 parts by weight. When the mixing ratio of the component A and the component B is out of the range described above, the resulting resin compositions will suffer problems such as lower mechanical strength including rigidity and degraded mouldability.

When the total of the component A and the component B is 100 parts by weight, the content of the component C mixed is from 0.05 to 20 parts by weight, and preferably from 0.5 to 10 parts by weight. When the content of the component C is less than 0.05 part by weight, the compatibility of the resins of the component

A and of the component B is not adequate, and the respective physical properties of the resulting resin compositions are not improved adequately. When the content of the component C exceeds 20 parts by weight, the improvements in the respective physical properties are not proportional to the content of the component C, and the impact strength of the resin compositions tend to deteriorate. Moreover, it is not economically disadvantageous in the production of resin compositions.

**Methods of Producing Thermoplastic Resin Compositions**

The order of adding the above-mentioned components A, B and C, the timing of adding such components, and the adding methods are not particularly restricted in the production of the thermoplastic resin compositions according to the present invention.

As the most simple example, all the components A, B and C may be heated and melted simultaneously. First the component A and the component B may be melted and kneaded together, then the component B may be added to the mixture, and the mixture may be melted and kneaded. In addition to them, a variety of combinations of the addition orders, timings and methods may be employed.

Wits regard to the specific method of producing the thermoplastic resin components according to the present invention, kneading machines such as single-screw< extruder, double-screw extruder, Banbury mixer and kneading roller or mixers such as Henschel mixer may be used to knead the above-mentioned respective components under heated and melted conditions. The kneading temperature depends on the kinds of components to be used, the mixed quantities, and physical properties of the resin composition to be produced, and can not be determined unconditionally. It, however, is normally selected within a range from 180 to 340 C.

In the thermoplastic resin compositions according to the present invention, the component C (graft copolymers or copolymers having formamide group) has an action of raising the compatibility of the component A [Component (A-1) or Component (A-2)] and the component B (thermoplastic resin component which virtually does not react with amino group). The mechanism of giving that action is estimated by considering the polymer structure of the component C as follows: First, the formamide group portion in the component C is decomposed by the action of heat during kneading and changed into amino group. Next, the amino group acts to combine the component C and the component A through chemical reactions such as amidation, esterification, transesterification, transamidation with a functional group of the component A, said functional group being able to react with amino group. As a result, a compatibility agent is formed, and this compatibility agent presumably improves the compatibility of the resins of the component A and of the component B.

It is estimated that various physical properties including impact resistance of the thermoplastic resin compositions according to the present invention were improved by the enhanced compatibility of the resins of the component A and of the component B.

According to the present invention, the compatibility of engineering plastics, or the compatibility of an engineering plastic and polyolefine resin, polystyrene resin, etc. are enhanced by the use of graft copolymers or copolymers having formamide group as a compatibility agent (the component C), and because of it, the thermoplastic resin compositions according to the present invention have the following remarkable merits:

(1) Thermoplastic resin compositions with excellent impact resistance are produced;

(2) Thermoplastic resin compositions, which can be moulded into mouldings with good appearance without any interlaminar cleavage, are produced;

(3) Thermoplastic resin compositions, which can be moulded at high temperature to produce mouldings of good hue without any coloring, are produced.

**Examples**

Some embodiments of the present invention will be described in the following, but it should be noted that the present invention is not limited by any of these embodiments.

1. Graft Type

Some embodiments using graft copolymers having formamide group as the component C (compatibility agent) of the thermoplastic resin compositions will be explained.

Polymer 1

(Graft copolymer having formamide group) 2.0 g of N-allylformamide (graft monomer) and 40 g of ethylene-propylene rubber (ethylene/propylene = 6/4) (raw material polymer) of which weight average molecular weight

is 50,000 were dissolved in 160 g of chlorobenzene. 0.5 g of dicumyl peroxide was dissolved into 40 g of chlorobenzene and the solution was added dropwise to the former solution at a temperature of 128 C. After completion of the dropwise addition of dicumyl peroxide, the reaction was allowed to continue for three hours, and the reacting mixture was put into methanol to remove nonreacted N-allylformamide. The resulting mixture was dried to obtain ethylene-propylene rubber grafted by N-allylformamide [polymer (1)]. The infrared absorption spectrum of the obtained graft product was measured. According to the absorption around 1660 cm-1 due to amide and the absorption around 720 cm-1 due to alkyl group of ethylene-propylene rubber, the quantity of N-allylformamide grafted was determined to be 2.7 % by weight relative to 100 % by weight of ethylene-propylene rubber.

Copolymers 2 to 8

Other graft copolymers having formamide group [copolymers 2 to 8] were prepared by methods similar to that of the above-mentioned copolymer 1. The results are shown in Table 1. Table 1 shows the raw material polymers, graft monomers and their grafted quantities of the copolymers 1 to 8. Mw indicates weight-avearge molecular weight, and Mn number-average molecular weight.

☆ 〔Table 1〕
Graft copolymers having formamide group

| | Kind of raw material polymer | Graft monomer | Weight % of graft |
|---|---|---|---|
| Polymer (1) | Ethylene-propylene rubber (mole ratio = 6/4, Mw = 50,000, Mn = 30,000) | N-allylformamide | 2.7 |
| Polymer (2) | Polypropylene (Mw = 60,000, Mn = 24,000) | N-allylformamide | 4.6 |
| Polymer (3) | Ethylene-propylene copolymer (mole ratio = 1/1, Mw = 11,800, Mn = 6,600) | N-allylformamide | 10.0 |
| Polymer (4) | Polyethylene (Mw = 5,000, Mn = 2,200) | N-(1-methyl-2-propenyl)formamide | 5 |
| Polymer (5) | Ethylene-propylene rubber (mole ratio = 6/4, Mw = 50,000, Mn = 30,000) | N-ethyl-N-allylformamide | 1.8 |
| Polymer (6) | Hydrogenated styrene-butadiene copolymer (mole ratio = 3/7, Mw = 50,000, Mn = 48,000) | N-methyl-N-(1-methyl-2-propenyl)formamide | 0.5 |
| Polymer (7) | Hydrogenated styrene-butadiene copolymer (mole ratio = 3/7, Mw = 50,000, Mn = 48,000) | N-methyl-N-allylformamide | 2.3 |
| Polymer (8) | Polyphenylene ether (Mw = 30,000, Mn = 18,000) | N-ethyl-N-(1-methyl-2-propenyl)formamide | 1.5 |

Embodiments 1 to 15

Component (A-a) for the component A was provided by those listed in table 2. Component (A-b) for the component A was provided by those listed in Table 3. The component B was provided by those listed in Table 4. The component C (graft copolymer) was provided by the above-mentioned copolymers (1) through (8). The table 2 and table 4 list the name, abbreviation, trade name, and manufacturer of each resin. Table 3 lists the kind, abbreviation, and kind of functional group of each resin. Mw indicates weight-average molecular weight, and Mn number-average molecular weight.

☆ 〔Table 2〕

Component (A − a)'

| Abbre-viation | Resin name | Trade name | Manufacturer |
|---|---|---|---|
| PET | Polyethylene terephthalate | Dianite PA500 | Mitsubishi Rayon Co., Ltd. |
| PBT | Polybutylene terephthalate | Juranex 2002 | Polyplastics Co.,Ltd |
| PC | Polycarbonate | Taflon A2500 | Idemitsu Sekiyu Kagaku Co.,Ltd |
| PA | Polyamide-6 | Leona 1300S | Asahi Chemical Industry Co., Ltd. |

☆ 〔Table 3〕

Component (A − b)

| Abbreviation | Resin name | Kind of functional group |
|---|---|---|
| PP-MAH | Maleic-anhydride-grafted polypropylene (maleic anhydride content: 1.0 weight %, Mw = 73,000, Mn = 34,000) | Succinic anhydride group |
| PA-COOH | Polyamide-6,6 with carboxyl group terminal (Mw = 60,000, Mn = 32,000) | Carboxyl group |
| E-GMA | Ethylene-glycidyl methacrylate copolymer (mole ratio = 98/2, Mw = 58,000, Mn = 28,000) | Epoxy group |
| E-EA | Ethylene-ethyl acrylate copolymer (mole ratio = 90/10) (Mw=62,000, Mn=29,000) | Ester group |
| St-AAM | Styrene-acrylamide copolymer (mole ratio = 97/3, Mw = 150,000, Mn = 72,000) | Amide group |
| St-OZN | Styrene-vinyloxazoline copolymer (mole ratio = 95/5, Mw = 78,000, Mn = 39,000) | Oxazoline group |
| St-IMZN | Styrene-vinylimidazoline copolymer (mole ratio = 95/2, Mw = 68,000, Mn = 33,000) | Imidazoline group |
| E-Cl | Chlorinated polyethylene (chlorine content: 10 wt %, Mw = 64,000, Mn = 31,000) | Cl group |
| St-PhMI | Styrene-phenylmaleimide copolymer (mole ratio = 90/10, Mw = 180,000, Mn = 83,000) | Imido group |

☆ [Table 4]

Component B

| Abbreviation | Resin name | Trade name | Manufacturer |
|---|---|---|---|
| PP | Polypropylene | UP Polypro ME230 | Tokuyama Soda Co., Ltd. |
| PS | Polystyrene | Idemitsu styrol US300 | Idemitsu Sekiyu Kagaku Co., Ltd |
| ABS | Acrylonitrile-butadiene-styrene copolymer | Toyorak 500 | Toray Industries, Inc. |
| PPE | Polyphenylene ether | Noryl N225J | Nippon G. E. Plastics Co., Ltd |

These components A, B and C were used in the specified ratios shown in Table 5 and Table 6 to obtain thermoplastic resin compositions of Embodiment 1 to 15.

In Embodiments 1 to 8, Component (A-1) [Component (A-a) or Component (A-b)] was dry-blended with the component C at the specified ratio and dried. Then the blend was melted and kneaded by a double screw extruder (KRC kneader, made by Kurimoto Tekkosho). Then the mixture was taken out and pelletized. Next, the specified quantity of the component B was added to the mixture, and the resulted mixture was melted and kneaded a,ain by the double screw extruder. The product was taken out and pelletized to obtain the thermoplastic resin composition.

In Embodiments 9 to 15, the resin of Component (A-2) was dry-blended with the component C at the specified ratio and dried. Then the blend was melted and kneaded by the double screw extruder (KRC kneader, made by Kurimoto Tekkosho). Then the mixture was taken out and pelletized. Next, the specified quantity of the component B was added to the mixture, and the resulted mixture was melted and kneaded again by the double screw extruder. The product was taken out and pelletized to obtain the thermoplastic resin composition.

The thermoplastic resin compositions thus obtained were processed by an injection moulding machine (Hipershot 3000, made by Niigata Tekkosho) to obtain mouldings. The mouldings were examined in terms of Izod impact strength, presence of interlaminar cleavage and appearance, and the results are listed in Table 5 and Table 6.

The methods for assessing the above-mentioned mouldings were as follows: As for Izod impact strength, Izod impact value was measured according to JIS K-7110, and the measuring temperatures were 23 C and -30 C.

The presence or absence of interlaminar cleavage in the mouldings was checked by the cross cut test. A knife was used to cut the surface of each test specimen to mark grids of 100 squares of 1 mm x 1 mm. Then a piece of cellophane adhesive tape was pressed against the test piece. A strong force was applied to the cellophane tape to peel it off. Then the number of squares which did not stick to the cellophane tape and were not removed from the test piece was counted. The greater the number, the lower the tendency of interlaminar cleavage.

Regarding the appearance and hue of the mouldings, the mouldings were visually examined for flow mark, fuzz, silver streak and coloring. Mouldings with good appearance are marked with ○, those with rather defective appearance are marked with Δ, and those with defective appearance are marked with X in Table 5 and

Table 6.

Comparative Examples 1 to 15

In the respective embodiments 1 to 15, the mixtures to which the component C (compatibility agent) was not added were used as comparative examples 1 to 15. The results are shown in Table 5 and Table 6.

☆ (Table 5)

| | Composition of thermoplastic resin composition | | | | | | | | Physical properties and appearance | | | |
|---|---|---|---|---|---|---|---|---|---|---|---|---|
| | Component (A-1) | | | | Component B | | Component C | | Izod impact strength | | Cleavage | Appearance |
| | (A－a) | | (A－b) | | | | | | | | | |
| | Kind | Part | Kind | Part | Kind | Part | Kind | Part | 23℃ | －30℃ | | |
| Embodiment 1 | PBT | 25 | — | | PP | 75 | Polymer (1) | 5 | 32.8 | 14.6 | 100/100 | ○ |
| Embodiment 2 | PET | 70 | — | | PS | 30 | Polymer (6) | 10 | 28.2 | 19.8 | 100/100 | ○ |
| Embodiment 3 | PC | 30 | — | | ABS | 70 | Polymer (7) | 5 | 48.2 | 29.4 | 100/100 | ○ |
| Embodiment 4 | PA | 60 | — | | PPE | 40 | Polymer (8) | 5 | 32.1 | 18.0 | 100/100 | ○ |
| *Comp. Ex. 1 | PBT | 25 | — | | PP | 75 | — | | 2.9 | 1.6 | 21/100 | × |
| Comp. Ex. 2 | PET | 70 | — | | PS | 30 | — | | 4.8 | 1.9 | 18/100 | × |
| Comp. Ex. 3 | PC | 30 | — | | ABS | 70 | — | | 8.9 | 3.2 | 32/100 | × |
| Comp. Ex. 4 | PA | 60 | — | | PPE | 40 | — | | 4.1 | 1.8 | 16/100 | × |
| Embodiment 5 | — | | PP-MAH | 70 | ABS | 30 | Polymer (6) | 5 | 27.2 | 16.1 | 100/100 | ○ |
| Embodiment 6 | — | | PA-COOH | 25 | PP | 75 | Polymer (3) | 2 | 31.2 | 17.8 | 100/100 | ○ |
| Embodiment 7 | — | | E-GMA | 30 | PS | 70 | Polymer (7) | 3 | 20.1 | 11.0 | 100/100 | ○ |
| Embodiment 8 | — | | E-EA | 75 | PPE | 25 | Polymer (8) | 5 | 26.4 | 15.0 | 100/100 | ○ |
| Comp. Ex. 5 | — | | PP-MAH | 70 | ABS | 30 | — | | 2.5 | 1.1 | 7/100 | × |
| Comp. Ex. 6 | — | | PA-COOH | 25 | PP | 75 | — | | 4.3 | 1.9 | 20/100 | × |
| Comp. Ex. 7 | — | | E-GMA | 30 | PS | 70 | — | | 3.8 | 1.8 | 15/100 | × |
| Comp. Ex. 8 | — | | E-EA | 75 | PPE | 25 | — | | 5.1 | 2.8 | 12/100 | × |

NB : *···Comparative Example

☆ [Table 6]

| | Composition of thermoplastic resin composition | | | | | | | | | | Physical properties and appearance | | | |
|---|---|---|---|---|---|---|---|---|---|---|---|---|---|---|
| | Component (A-2) | | | | | | Component B | | Component C | | Izod impact strength | | Cleavage | Appearance |
| | Thermoplastic resin | | (A − a) | | (A − b) | | | | | | | | | |
| | Kind | Part | Kind | Part | Kind | Part | Kind | Part | Kind | Part | 23℃ | −30℃ | | |
| Embodiment 9 | PS | 75 | PC | 10 | — | | PP | 25 | Polymer (2) | 5 | 18.5 | 8.2 | 100/100 | ○ |
| Embodiment 10 | ABS | 60 | PC | 10 | — | | PPE | 40 | Polymer (7) | 5 | 27.8 | 13.2 | 100/100 | ○ |
| *Comp. Ex. 9 | PS | 75 | PC | 10 | — | | PP | 25 | — | | 1.1 | 0.5 | 7/100 | × |
| Comp. Ex. 10 | ABS | 60 | PC | 10 | — | | PPE | 40 | — | | 6.2 | 2.8 | 40/100 | △ |
| Embodiment 11 | PPE | 30 | — | | St-AAM | 5 | PP | 70 | Polymer (1) | 5 | 29.1 | 14.0 | 100/100 | ○ |
| Embodiment 12 | PP | 30 | — | | St-OZN | 3 | PPE | 70 | Polymer (4) | 5 | 26.1 | 11.0 | 100/100 | ○ |
| Embodiment 13 | ABS | 25 | — | | St-IMZN | 5 | PP | 75 | Polymer (5) | 5 | 31.5 | 15.8 | 100/100 | ○ |
| Embodiment 14 | PP | 25 | — | | E-Cl | 10 | ABS | 75 | Polymer (7) | 5 | 35.3 | 18.2 | 100/100 | ○ |
| Embodiment 15 | PP | 70 | — | | St-PhMI | 10 | PS | 30 | Polymer (2) | 5 | 20.0 | 11.0 | 100/100 | ○ |
| Comp. Ex. 11 | PPE | 30 | — | | St-AAM | 5 | PP | 70 | — | | 4.8 | 1.9 | 15/100 | × |
| Comp. Ex. 12 | PP | 30 | — | | St-OZN | 3 | PPE | 70 | — | | 3.9 | 1.8 | 12/100 | × |
| Comp. Ex. 13 | ABS | 25 | — | | St-IMZN | 5 | PP | 75 | — | | 3.1 | 1.3 | 10/100 | × |
| Comp. Ex. 14 | PP | 25 | — | | E-Cl | 10 | ABS | 75 | — | | 4.3 | 2.8 | 9/100 | × |
| Comp. Ex. 15 | PP | 70 | — | | St-PhMI | 10 | PS | 30 | — | | 2.1 | 1.0 | 11/100 | × |

NB : *···Comparative Example

As shown in Table 5 and Table 6, the impact strengths of the mouldings of embodiments 1 to 15 were superior to the impact strengths of comparative examples 1 to 15 at both measuring temperatures of 23 C and -30 C. With regard to the interlaminar cleavage property of the mouldings examined by the cross cut test, the values of the mouldings of embodiments 1 to 15 were all 100/100 and no interlaminar cleavage was observed. In contrast, considerable interlaminar cleavages were caused in the mouldings of comparative examples 1 to 15. Moreover, the appearance of all the mouldings of embodiments 1 to 15 was satisfactory, but the appearance of the mouldings of comparative examples 1 to 15 was defective.

2. Copolymerization Type

Some embodiments which used copolymers having formamide group as the component C (compatibility agent) of thermoplastic resin compositions will be explained.

Polymer 9

(Copolymer having formamide group) 40 mL of purified n-heptane was loaded in an autoclave with an electromagnetic stirrer. The capacity of the autoclave was 200 mL and the autoclave had a catalyst chamber. The autoclave was cooled with ice. The air in the system of the autoclave was substituted with nitrogen, then 42.0 g (1 mole) of propylene and 4.25 g (0.05 mole) of N-allylformamide were loaded in the autoclave. The contents were heated up to 70 C, and the port of the catalyst chamber was opened to load 65 mg of titanium trichloride and 0.74 millimole of diethylaluminium chloride in the form of 5 % n-heptane solution in the presence of nitrogen stream. The port of the catalyst chamber was closed, the stirrer was operated, and nitrogen gas of which pressure was a little higher than the internal pressure (about 19.5 kg/cm2 ) of the reaction system was injected for an instant to remove the Teflon cap at the lower end of the catalyst chamber and add the catalyst.

After one hour of polymerization at 70 C, the internal pressure dropped to 11.0 kg/cm2 . The autoclave was cooled, and the nonreacted monomer was purged. Then the contents were poured into 200 mL of methanol. White powder was obtained. This powder was filtrated and washed with 100 mL of methanol and dried. 19.8 g of propylene-n-allylformamide copolymer (copolymer 9) was obtained.

The infrared absorption spectrum of the above-mentioned copolymer was measured, and the strength of absorption by formamide at 1685 cm-1 and the strength of absorption by propylene at 1450 cm-1 were compared with each other to determine the composition of the copolymer; propylene/N-allylformamide = 97.9/2.1 (mole/mole). The molecular weight of the copolymer was measured by GPC (gel permeation chromatography). The weight-average molecular weight (Mw) was 65,000 and the number-average molecular weight (Mn) was 31,500.

Polymers 10 and 11

Other copolymers having formamide group (copolymers 10 and 11] were prepared by a method similar to that for the polymer 9, and the results are shown in Table 7.

Table 7 shows the kinds, quantities and copolymerization conditions of the raw material monomers. It also shows the yield, molecular weight and N-allylformamide content of the copolymers obtained.

☆ [Table 7]

Copolymer having formamide group

| | Ethylene unsaturated monomer | | N-allylformamide (g) | Polymerization conditions | | Copolymer obtained | | | |
|---|---|---|---|---|---|---|---|---|---|
| | Kind | Qty.(g) | | Temp.(°C) | Time (hr) | Yield (g) | N-allyl formamide (mole %) | Mw | Mn |
| Polymer (9) | Propylene | 42.0 | 4.25 | 70 | 1 | 18.8 | 2.1 | 65,000 | 31,500 |
| Polymer (10) | Ethylene | 56.0 | 14.0 | 70 | 1 | 27.5 | 5.1 | 48,000 | 23,500 |
| Polymer (11) | Propylene | 42.0 | 12.8 | 70 | 1 | 22.3 | 8.1 | 38,000 | 17,800 |

Polymer 12

(Copolymer having formamide)

5.5 g of azobisisobutyronitrile (AIBN) dissolved in 500 g of toluene was put in a 2,000 mL flask which was provided with a cooler, a thermometer and a nitrogen feed tube. Then 336.0 g (4.0 moles) of hexene-1 and 19.8

g (0.2 mole) of N-(1-methyl-2-propenyl)formamide were charged, and the the gas inside the flask was replaced with nitrogen. Then the mixture was heated at 60 C for 10 hours and a viscous solution was obtained. The solution was put into 2,000 g of methanol, and the precipitated copolymer was filtered and dried.

The yield of the copolymer [copolymer 12] was 285.1 g. The infrared absorption spectrum of the copolymer was measured. From the absorption at 1450 cm-1 due to hexene-1 and the absorption at 1685 cm-1 due to amido group of N-(1-methyl-2-propenyl)formamide, the mole ratio of the hexene-1 repeating unit to N-(1-methyl-2-propenyl)formamide group repeating unit was determined to be 96.0/4.0. The weight-average molecular weight (Mw) of the copolymer was 25,000 and the number-average molecular weight (Mn) was 11,000.

Polymers 13 to 16

The ethylene unsaturated monomers, formamide compounds and radical starters listed in Table 8 were used to prepare, under the polymerization conditions listed in Table 8, other copolymers [polymers 13 to 16] having formamide by a method similar to that of the polymer 12. The results are shown in Table 8. Table 8 shows the yield, molecular weight and formamide repeating unit content of the copolymers obtained.

☆ 〔Table 8〕

Copolymers having formamide group

| | Ethylene unsaturated monomer | | Formamide compound | | Radical initiator | | Polymerization condition | | Copolymer obtained | | | |
|---|---|---|---|---|---|---|---|---|---|---|---|---|
| | Kind | Qty. (g) | Kind | Qty. (g) | Kind | Qty. (g) | Temp. (°C) | Time (hr) | Yield (g) | Formamide repeating unit content (mole %) | Mw | Mn |
| Polymer (12) | Hexene-1 | 336 | N-(1-methyl-2-propenyl)formamide | 18.8 | AIBN | 5.5 | 60 | 10 | 285.1 | 4.0 | 25,000 | 11,000 |
| Polymer (13) | Octene-1 | 336 | N-ethyl-N-allylformamide | 7.0 | BPO | 5.0 | 80 | 9 | 291.2 | 1.9 | 32,000 | 15,000 |
| Polymer (14) | Styrene | 416 | N-methyl-N-(1-methyl-2-propenyl)formamide | 3.0 | BPO | 5.5 | 80 | 10 | 354.0 | 0.4 | 53,000 | 24,000 |
| Polymer (15) | Styrene | 416 | N-methyl-N-allylformamide | 10.0 | BPO | 5.5 | 80 | 10 | 340.1 | 2.5 | 43,000 | 21,000 |
| Polymer (16) | Styrene | 416 | N-ethyl-N-(1-methyl-2-propenyl)formamide | 8.0 | BPO | 5.5 | 80 | 10 | 362.9 | 1.4 | 38,000 | 16,000 |

Embodiments 16 to 30

Component (A-a) for the component A was provided by those listed in the above-mentioned Table 2. Component (A-b) for the component A was provided by those listed in the above-mentioned Table 3. The component B was provided by those listed in the above-mentioned Table 4. The component C (copolymer) was provided by the above-mentioned polymers 9 to 16.

These components A, B and C were used at the specified ratios shown in Table 9 and Table 10, and the thermoplastic resin compositions of the embodiments 16-30 were obtained.

In the embodiments 16 to 23, Component (A-1) [Component (A-a) or Component (A-b)] and the component C were dry-blended at the specified ratio and dried in advance. Then the mixture was melted and kneaded at 260°C by a double screw extruder (KRC kneader, made by Kurimoto Tekkosho). The material was taken out and pelletized. Then, the specified quantity of the component B was added to and mixed with the pellets, and the double shaft extruder was used again to melt and knead the mixture. The resulted mixture was taken out and pelletized to obtain the desired thermoplastic resin composition.

In the embodiments 24 to 30, the resin of Component (A-2) and the component C were dry-blended at the specified ratio and dried in advance. Then the mixture was melted and kneaded at 260°C by using a double shaft extruder (KRC kneader, made by Kurimoto Tekkosho). The material was taken out and pelletized. Then, the specified quantity of the component B was added to and mixed with the pellets, and the double shaft extruder was used again to melt and knead the mixture. The resulted mixture was taken out and pelletized to obtain the desired thermoplastic resin composition.

The thermoplastic resin compositions thus obtained were processed by an injection moulder (Hipershot 3000, made by Niigata Tekkosho) to produce mouldings. The mouldings were examined in terms of Izod impact strength, presence of interlaminar cleavage and appearance. The results are shown in Table 9 and Table 10. The assessment of the above-mentioned mouldings was made by methods similar to those used for the embodiments 1 to 15.

Comparative Examples 1 to 15

The cases in which the use of the component C (compatibility agent) was omitted in the above-mentioned respective embodiments 16 to 30 were used as the comparative examples 1 to 15, and the results are shown in Table 9 and Table 10.

☆ (Table 9)

| | Composition of thermoplastic resin composition | | | | | | | | Physical properties and appearance | | | |
|---|---|---|---|---|---|---|---|---|---|---|---|---|
| | Component (A-1) | | | | Component B | | Component C | | Izod impact strength | | Cleavage | Appearance |
| | (A − a) | | (A − b) | | | | | | | | | |
| | Kind | Part | Kind | Part | Kind | Part | Kind | Part | 23℃ | −30℃ | | |
| Embodiment 16 | PBT | 25 | — | | PP | 75 | Polymer (9) | 5 | 34.7 | 16.9 | 100/100 | ○ |
| Embodiment 17 | PET | 70 | — | | PS | 30 | Polymer (14) | 10 | 31.2 | 14.2 | 100/100 | ○ |
| Embodiment 18 | PC | 30 | — | | ABS | 70 | Polymer (15) | 5 | 56.2 | 30.8 | 100/100 | ○ |
| Embodiment 19 | PA | 60 | — | | PPE | 40 | Polymer (16) | 5 | 27.4 | 12.1 | 100/100 | ○ |
| *Comp. Ex. 1 | PBT | 25 | — | | PP | 75 | — | | 2.8 | 1.6 | 21/100 | × |
| Comp. Ex. 2 | PET | 70 | — | | PS | 30 | — | | 4.8 | 1.9 | 18/100 | × |
| Comp. Ex. 3 | PC | 30 | — | | ABS | 70 | — | | 8.9 | 3.2 | 32/100 | × |
| Comp. Ex. 4 | PA | 60 | — | | PPE | 40 | — | | 4.1 | 1.8 | 16/100 | × |
| Embodiment 20 | — | | PP-MAH | 70 | ABS | 30 | Polymer (14) | 5 | 29.4 | 13.9 | 100/100 | ○ |
| Embodiment 21 | — | | PA-COOH | 25 | PP | 75 | Polymer (11) | 2 | 27.4 | 14.2 | 100/100 | ○ |
| Embodiment 22 | — | | E-GMA | 30 | PS | 70 | Polymer (15) | 3 | 21.1 | 11.1 | 100/100 | ○ |
| Embodiment 23 | — | | E-EA | 75 | PPE | 25 | Polymer (16) | 5 | 26.8 | 15.5 | 100/100 | ○ |
| Comp. Ex. 5 | — | | PP-MAH | 70 | ABS | 30 | — | | 2.5 | 1.1 | 7/100 | × |
| Comp. Ex. 6 | — | | PA-COOH | 25 | PP | 75 | — | | 4.8 | 1.9 | 20/100 | × |
| Comp. Ex. 7 | — | | E-GMA | 30 | PS | 70 | — | | 3.8 | 1.8 | 15/100 | × |
| Comp. Ex. 8 | — | | E-EA | 75 | PPE | 25 | — | | 5.1 | 2.8 | 12/100 | × |

NB : *···Comparative Example

☆ [Table 10]

| | Composition of thermoplastic resin composition | | | | | | | | | | Physical properties and appearance | | | |
|---|---|---|---|---|---|---|---|---|---|---|---|---|---|---|
| | Component (A-2) | | | | | | Component B | | Component C | | Izod impact strength | | Cleavage | Appearance |
| | Thermoplastic resin | | (A − a) | | (A − b) | | | | | | | | | |
| | Kind | Part | Kind | Part | Kind | Part | Kind | Part | Kind | Part | 23°C | −30°C | | |
| Embodiment 24 | PS | 75 | PC | 10 | — | | PP | 25 | Polymer (10) | 5 | 19.2 | 10.1 | 100/100 | ○ |
| Embodiment 25 | ABS | 60 | PC | 10 | — | | PPE | 40 | Polymer (15) | 5 | 27.6 | 12.9 | 100/100 | ○ |
| *Comp. Ex. 9 | PS | 75 | PC | 10 | — | | PP | 25 | — | | 1.1 | 0.5 | 7/100 | × |
| Comp. Ex. 10 | ABS | 60 | PC | 10 | — | | PPE | 40 | — | | 6.2 | 2.8 | 40/100 | △ |
| Embodiment 26 | PPE | 30 | — | | St-AAM | 5 | PP | 70 | Polymer (9) | 5 | 28.3 | 13.8 | 100/100 | ○ |
| Embodiment 27 | PP | 30 | — | | St-OZN | 3 | PPE | 70 | Polymer (12) | 5 | 26.8 | 12.1 | 100/100 | ○ |
| Embodiment 28 | ABS | 25 | — | | St-IMZN | 5 | PP | 75 | Polymer (13) | 5 | 33.1 | 14.3 | 100/100 | ○ |
| Embodiment 29 | PP | 25 | — | | E-Cl | 10 | ABS | 75 | Polymer (15) | 5 | 36.1 | 16.8 | 100/100 | ○ |
| Embodiment 30 | PP | 70 | — | | St-PhMI | 10 | PS | 30 | Polymer (10) | 5 | 21.0 | 11.9 | 100/100 | ○ |
| Comp. Ex. 11 | PPE | 30 | — | | St-AAM | 5 | PP | 70 | — | | 4.8 | 1.8 | 15/100 | × |
| Comp. Ex. 12 | PP | 30 | — | | St-OZN | 3 | PPE | 70 | — | | 3.9 | 1.8 | 12/100 | × |
| Comp. Ex. 13 | ABS | 25 | — | | St-IMZN | 5 | PP | 75 | — | | 3.1 | 1.3 | 10/100 | × |
| Comp. Ex. 14 | PP | 25 | — | | E-Cl | 10 | ABS | 75 | — | | 4.3 | 2.9 | 8/100 | × |
| Comp. Ex. 15 | PP | 70 | — | | St-PhMI | 10 | PS | 30 | — | | 2.1 | 1.0 | 11/100 | × |

NB : *···Comparative Example

Table 9 and Table 10 show that the impact strengths of the mouldings of the embodiments 16 to 30 are superior to those of the mouldings of the corresponding comparative examples of 1 to 15 at both temperatures of 23°C and -30°C. As for the interlaminar cleavage of the mouldings examined by the cross cut test, the values of the mouldings of the embodiments 16 to 30 were 100/100 or no interlaminar cleavage occurred. On the other hand, the mouldings of the comparative examples 1 to 15 showed considerable interlaminar cleavage. Moreover, the appearances of all the mouldings of the embodiments 16 to 30 were satisfactory whereas the appearances of the mouldings of the comparative examples 1 to 15 were defective.

## Claims

1. Thermoplastic resin compositions characterized in that they contain the following component A, component B and component C:
   (A) a polymer component having a functional group which can react with amino group;
   (B) a thermoplastic resin component which virtually does not react with amino group under the moulding conditions; and
   (C) a graft copolymers obtained by making graft reaction of thermoplastic polymer with formamide compound (I) expressed by the following chemical formula:

   $$CH_2=CH-\underset{\displaystyle R^1}{\underset{|}{CH}}-\underset{\displaystyle R^2}{\underset{|}{N}}-CHO \qquad (I)$$

   (In chemical formula (I), $R^1$ and $R^2$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

2. Thermoplastic resin compositions of Claim 1, characterized in that the thermoplastic resin component of said component B contains one or more resins selected from a group of polyolefinic resin, polystyrene resin, ABS resin and polyether resin.

3. Thermoplastic resin compositions of Claim 1 or 2, characterized in that the polymer component of said component A having a functional group which can react with amino group contains one or more resins selected from a group of polyester resin, polycarbonate resin and polyamide resin.

4. Thermoplastic resin compositions of Claim 1 or 2, characterized in that the polymer component of said component A having a functional group which can react with amino group contains one or more kinds of polymers having, in the molecule, a functional group selected from a group of succinic anhydride group, carboxyl group, epoxy group, ester group, amide group, cyclic iminoether group, cyclic iminoamino group, halogen group and imido group.

5. Thermoplastic resin compositions characterized in that they contain the following component A, component B and component C:
   (A) a composition comprising a polymer component having a functional group which can react with amino group and a thermoplastic resin which virtually does not react with amino group under moulding conditions and differs from the resin used in the following component B;
   (B) a thermoplastic resin component which virtually does not react with amino group under the moulding conditions; and
   (C) a graft copolymers obtained by making graft reaction of thermoplastic polymer with formamide compound (I) expressed by the following chemical formula:

   $$CH_2=CH-\underset{\displaystyle R^1}{\underset{|}{CH}}-\underset{\displaystyle R^2}{\underset{|}{N}}-CHO \qquad (I)$$

   (In Chemical formula (I), $R^1$ and $R^2$ independently represent a hydrogen atom, an alkyl group with 1 to

8 carbon atoms, a cycloalkyl group with 6 to 10 carbon atoms, an aryl group with 6 to 10 carbon atoms, or an arylalkyl group with 6 to 10 carbon atoms.)

**6.** Thermoplastic resin compositions of Claim 5, characterized in that the thermoplastic resin component of said component B contains one or more resins selected from a group of polyolefinic resin, polystyrene resin, ABS resin and polyether resin.

**7.** Thermoplastic resin compositions of Claim 5 or 6, characterized in that the polymer component of said component A having a functional group which can react with amino group contains one or more resins selected from a group of polyester resin, polycarbonate resin and polyamide resin.

**8.** Thermoplastic resin compositions of Claim 5 or 6 characterized in that the polymer component of said component A having a functional group which can react with amino group contains one or more kinds of polymers having, in the molecule, a functional group selected from a group of succinic anhydride group, carboxyl group, epoxy group, ester group, amide group, cyclic iminoether group, cyclic iminoamino group, halogen group and imido group.

**9.** Copolymers characterized in that they contain, in the molecule, a formamide constitutional repeating unit (II) expressed by the following chemical formula and a repeating unit of ethylenic unsaturated monomer.

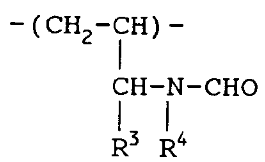

(II)

(In chemical formula (II), $R^3$ and $R^4$ independently represent a hydrogen atom, an alkyl group with 1 to 8 carbon atoms, a cycloalkyl group with 6 to 10 carbon atoms, an aryl group with 6 to 10 carbon atoms, or an arylalkyl group with 6 to 10 carbon atoms.)

**10.** Thermoplastic resin compositions characterized in that they contain the following component A, component B and component C:

(A) a polymer component having a functional group which can react with amino group;

(B) a thermoplastic resin component which virtually does not react with amino group under the moulding conditions; and

(C) a copolymer described in Claim 9.

**11.** Thermoplastic resin compositions of Claim 10, characterized in that the thermoplastic resin component of said component B contains one or more resins selected from a group of polyolefinic resin, polystyrene resin, ABS resin and polyether resin.

**12.** Thermoplastic resin compositions of Claim 10 or 11, characterized in that the polymer component of said component A having a functional group which can react with amino group contains one or more resins selected from a group of polyester resin, polycarbonate resin and polyamide resin.

**13.** Thermoplastic resin compositions of Claim 10 or 11, characterized in that the polymer component of said component A having a functional group which can react with amino group contains one or more kinds of polymers having, in the molecule, a functional group selected from a group of succinic anhydride group, carboxyl group, epoxy group, ester group, amide group, cyclic iminoether group, cyclic iminoamino group, halogen group and imido group.

**14.** Thermoplastic resin compositions characterized in that they contain the following component A, component B and component C:

(A) a composition comprising a polymer component having a functional group which can react with amino group and a thermoplastic resin which virtually does not react with amino group under moulding conditions and differs from the resin used in the following component B;

(B) a thermoplastic resin component which virtually does not react with amino group under the moulding conditions; and

(C) a copolymer described in Claim 9.

**15.** Thermoplastic resin compositions of Claim 14, characterized in that the thermoplastic resin component of said component B contains one or more resins selected from a group of polyolefinic resin, polystyrene resin, ABS resin and polyether resin.

**16.** Thermoplastic resin compositions of Claim 14 or 15, characterized in that the polymer component of said component A having a functional group whith can react with amino group contains one or more resins selected from a group of polyester resin, polycarbonate resin and polyamide resin.

**17.** Thermoplastic resin compositions of Claim 14 or Claim 15, characterized in that the polymer component of said component A having a functional group which can react with amino group contains one or more kinds of polymers having, in the molecule, a functional group selected from a group of succinic anhydride group, carboxyl group, epoxy group, ester group, amide group, cyclic iminoether group, cyclic iminoamino group, halogen group and imido group.

European Patent Office

# EUROPEAN SEARCH REPORT

Application Number
EP 93 30 2857

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
| --- | --- | --- | --- |
| X,P | Derwent Publications Ltd., London, GB; AN 93-088839 & JP-A-5 032 902 (DAIICHI) 9 February 1993 * abstract * | 1-17 | C08L101/02 |
| A | Derwent Publications Ltd., London, GB; AN 90-085874 & JP-A-2 036 248 (SANYO CHEM.) 8 February 1990 * abstract * | 1 | |
| A | EP-A-0 418 068 (SUMITOMO CHEM.) * claim 1 * | 1 | |
| | | | TECHNICAL FIELDS SEARCHED (Int. Cl.5) |
| | | | C08L |

The present search report has been drawn up for all claims

| Place of search | Date of completion of the search | Examiner |
| --- | --- | --- |
| THE HAGUE | 21 JULY 1993 | LENTZ J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)